# EUROPEAN PATENT SPECIFICATION

(11) **EP 2 404 462 B1**
(45) Date of publication and mention of the grant of the patent: **16.04.2014**
(21) Application number: 09801308.9
(22) Date of filing: 18.12.2009
(51) Int. Cl.: H04W 28/06

(54) **ROBUST DATA TRANSMISSION**
ROBUSTE DATENÜBERTRAGUNG
TRANSMISSION DE DONNÉES ROBUSTE

(30) Priority: 05.03.2009 US 157629 P
(43) Date of publication of application: 11.01.2012
(73) Proprietor: Telefonaktiebolaget L M Ericsson (PUBL), 164 83 Stockholm (SE)
(72) Inventor: BERGSTRÖM, Andreas, S-590 47 Vikingstad (SE); SCHLIWA-BERTLING, Paul, S-SE-590 71 Ljungsbro (SE); JAKOBSSON, Thommy, S-SE-584 39 Linköping (SE)
(74) Representative: Kühn, Friedrich Heinrich
(86) International application number: PCT/SE2009/051455
(87) International publication number: WO 2010/101504

(56) References cited:
- WO-A1-02/078383
- US-B1- 6 968 190
- ERICSSON: "LTE PDCP Header Content" 3GPP DRAFT; R2-074477, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG2, no. Shanghai, China; 20071005, 5 October 2007 (2007-10-05), XP050137020 [retrieved on 2007-10-05]

## Description

### TECHNICAL FIELD

The present invention relates to a method and a device for providing more robust data transmission in a GERAN (Global System for Mobile communication (GSM)/Edge Radio Access Network) radio system.

### BACKGROUND

Voice over Internet Protocol (IP), VoIP, is one of the service types within the framework of Multimedia Telephony, MMTel, which is the Third Generation Partnership Project (3GPP) standardization of IP based multimedia services over 3GPP accesses like GSM/Edge Radio Access Network (GERAN), Universal Mobile Telecommunications System (UMTS) Terrestrial Radio Access Network UTRAN or Evolved UTRAN (E-UTRAN).

Although 3GPP have provided the preconditions for functioning MMTel services using GERAN, there is still a strong need for further improvements in the implementation in order to achieve good coverage, capacity and robust performance.

One such issue is the overhead from Real-Time Transport Protocol/User Datagram Protocol/Internet Protocol (RTP/UDP/IP) headers. When the traffic consist of many tiny packets, as is the case for VoIP, the headers will constitute a large part of the total amount of bandwidth, often even more than the actual payload (voice data) itself.

WO 02/078383 discloses an SGSN with a BSC.

The large overhead from RTP/UDP/IP may be significantly reduced with the aid of RObust Header Compression, ROHC, as described in RFC 3095 - "ROHC Framework and four profiles: RTP, UDP, ESP, and uncompressed", http://tools.ietf.org/html/rfc3095.

ROHC places a compressor before the link that reduces the large overhead to only a few bytes. To be able to compress header size so effectively ROHC distinguish between data that is considered static and data that is considered dynamic. Static data is compressed by using a simple delta compression; if values are changed, an uncompressed packet is sent to indicate the changes. For dynamic data, a window based least significant bits LSB encoding is used.

When packets where ROHC was applied are lost or received incorrectly, one out of two things can happen:
- If the next packet still is in the window for the LSB encoding, decoding of the packet can still take place.
- If the next packet falls out of the window, the decoder cannot trust this packet. The decoder gets out of synchronization with the encoder and the packet is discarded.

If the decoder is out of synchronization it must wait until it gets a new packet from the encoder with the dynamic parts uncompressed. Normally the encoder is informed about a need for re-synchronization through a feedback channel. In the mean time, i.e. until the re-synchronization is successfully performed, the decoder cannot trust any packets that arrive. Those are therefore discarded in the decoder which increases the Frame Erasure Rate (FER) in the VoIP case. Due to the fact that VoIP service is very sensitive to lost packets, i.e. there is a strong requirement on low FER, it is required that any re-synchronization must be performed in a fast and reliable manner.

It can be assumed that the user plane of the VoIP service will be transmitted in GERAN using the Radio Link Control (RLC) Non-Persistent Mode (RLC NPM) [44.060 Rel-7]. The main property of the RLC NPM is that RLC Data Packet Data Units (PDUs) are buffered for a limited period of time according to the value of the RLC NPM timer. At expiration of this timer the RLC PDU will be discarded and thus not delivered to the receiving entity.

Any ROHC related control signaling, i.e. the signaling that needs to be transmitted to the ROHC encoder in order to initialize a re-synchronization, is considered in the Radio Link Control RLC layer to be VoIP user plane and it will therefore utilize the previously briefly described RLC NPM-mode. Another effect of being not distinguishable from the VoIP user plane is that it will be treated with the same priority as the actual VoIP user plane.

Assuming that the synchronization between the ROHC encoder and decoder is typically lost when operating under bad radio conditions, the re-synchronization signaling possibly will be dropped due to the RLC NPM time expirations. A delayed re-synchronization will result in an outage of VoIP user plane delivery and thus audible defects. In GERAN, as compared to UTRAN or E-UTRAN, this loss of synchronization can be expected to happen more frequently due to the usage of the above described RLC NPM. During bad radio conditions, it can be envisaged that frequent retransmissions may cause queuing so that the RLC NPM may discard not only one but a series of blocks, which will trigger the need for re-synchronization of ROHC.

Also, as the ROHC signaling cannot be identified by the RLC entity, no means to ensure a fast transmission, e.g. via adjusted transmission order/scheduling, choice of a more robust MCS, usage of a higher output power etc. can be applied.

Hence there exist a need for an improved method and device for providing data transmission in an access network such as a GERAN access network, in particular when providing a VoIP service.

WO 02/078383 discloses an SGSN transmitting user plane data of service.

### SUMMARY

It is an object of the present invention to provide an improved method and device for providing data transmission and also to address the problems as outlined above.

This object and others are obtained by the method and device as set out in the appended claims.

Thus, in accordance with the present invention control signaling, such as ROHC control signaling is separated from the user plane in the RLC layer. An indication is further being provided to the RLC layer of the Base Station Controller (BSC) and the Mobile station (MS) for enabling recognition of the separated control signaling. Hereby a more robust transport means than for the user plane can be activated.

In accordance with one embodiment a method in a SGSN of transmitting data to a Mobile Station in a Global System for Mobile communication /Edge Radio Access Network, GERAN; radio system from the SGSN is provided. The method can be used in a radio system comprising a Base Transceiver Subsystem comprising a Base Station Controller, BSC, where the Base Transceiver Subsystem provides an air interface over which the mobile station can connect to the radio system. The method can comprise the steps of transmitting user plane data of service in GERAN using Radio Link Control, RLC, and separating control signaling, from the user plane in the RLC layer. In addition an indication to the RLC layer of the Base Station Controller, BSC, and the Mobile Station MS can be provided for enabling recognition of the separated control signaling.

In accordance with one embodiment, the control signaling is RObust Header Compression, ROHC, control signaling. In accordance with one embodiment the ROHC control signaling is implemented in a Sub-Network Dependent Convergence Protocol, SNDCP, layer, which uses exchange identifier, XID, to communicate control parameters. In accordance with one embodiment a separate parameter indicating ROHC signaling over XID is used during XID-negotiation between the Mobile Station and the SGSN.

In accordance with one embodiment the more robust transport means can be RLC Acknowledged mode, higher scheduling priority, more robust modulation and coding scheme etc.

In accordance with one embodiment ROHC is implemented in the Sub-Network Dependent Convergence Protocol (SNDCP) layer, which uses exchange identifier (XID) to communicate control parameters. The ROHC control signaling can use this to let the lower protocol layers of the system aware of that it is control plane and not user plane.

The invention also extends to devices and telecommunication nodes in particular a SGSN configured to transmit control signaling separated from user plane data in accordance with the above.

### BRIEF DESCRIPTION OF THE DRAWINGS

The present invention will now be described in more detail by way of non-limiting examples and with reference to the accompanying drawing, in which:
- Fig. 1 is a general overview illustrating some parts of a GSM (Global System for Mobile Communication) system.
- Fig. 2 is a view illustrating a Protocol stack in (E)GPRS, and
- Fig. 3 is a flow chart illustrating some procedural steps performed when transmitting data in a GERAN system.

### DETAILED DESCRIPTION

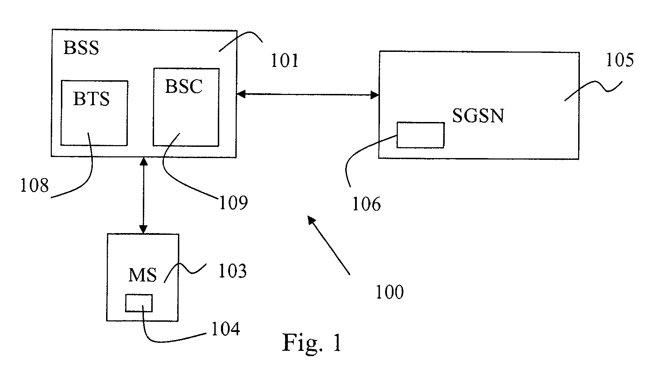

In Fig. 1 a radio system 100, in particular a GERAN radio system, providing for packet transmission on a connection between a mobile station (MS) 103 and a Serving GPRS Support Node (SGSN) 105 is depicted. The mobile station is associated with processor means 104 such as a central processor unit with an associated memory for performing procedural steps and functions within the mobile station. In particular the processor means 104 can be configured to perform the procedural steps and functions as described herein. Similarly, the SGSN is associated with processor means 106 such as a central processor unit with an associated memory for performing procedural steps and functions within the SGSN. In particular the processor means 106 can be configured to perform the procedural steps and functions as described herein. The connection involves transmission over an air interface commonly denoted Um connecting the mobile station with a Base Station Subsystem (BSS) 101. The BSS comprises a Base Transceiver System (BTS) 108 and a Base Station Controller (BSC) 109. The Base Transceiver System is, in turn, connected to the SGSN over an interface commonly denoted Gb.

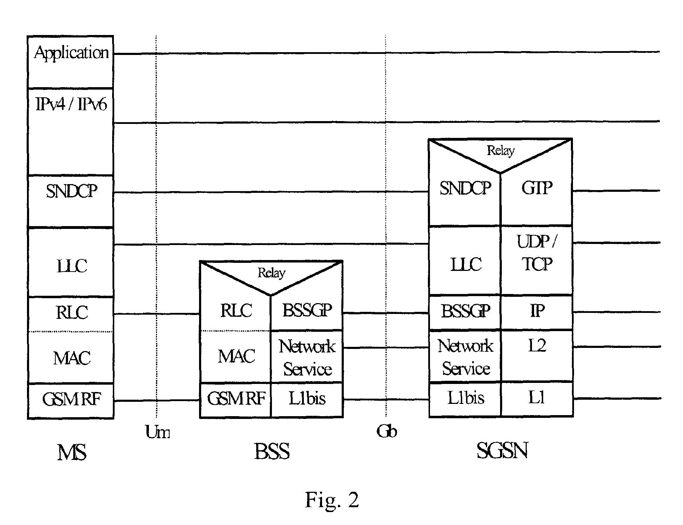

The transmission of data, in particular VoIP data in a system such as the one depicted in Fig. 1 will now be described in more detail. In Fig. 2 a view illustrating a Protocol stack in (E)GPRS is shown. In Fig. 2 the different layers in the Mobile Station (MS), the Base Station Subsystem (BSS) and the Serving GPRS Support Node (SGSN) are shown together with the respective interfaces.

In accordance with the present invention a control signaling, such as ROHC control signaling, is separated from the user plane in the RLC layer. An indication is further being provided to the RLC layer of the Base Station Controller BSC and the Mobile station MS for enabling recognition of the separated control signaling. Hereby a more robust transport means than for the user plane can be activated. The separation can be performed in the SGSN and separation can be used both for downlink radio link control (RLC) and also in the mobile station for uplink radio link control. In case a mobile station separates uplink RLC signaling the mobile station can be configured to mark the separated uplink RLC packets.

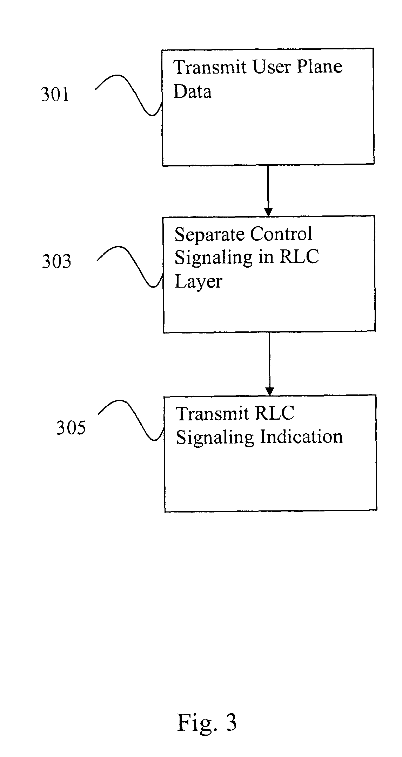

In fig. 3 a flow chart illustrating some procedural steps performed when transmitting data in a GERAN system is shown. The steps can be performed in a SGSN when transmitting data to a Mobile Station in a Global System for Mobile communication /Edge Radio Access Network, GERAN; radio system from the SGSN. The radio system comprises a Base Transceiver Subsystem comprising a Base Station Controller, BSC, where the Base Transceiver Subsystem providing an air interface over which the mobile station can connect to the radio system. First in a step 301 user plane data of service is transmitted in GERAN using Radio Link Control, RLC. Next, in a step 303 control signaling is separated from the user plane data in the RLC layer. Thereupon, in a step 305, an indication is transmitted to the RLC layer of the Base Station Controller, BSC, and the Mobile Station MS for enabling recognition of the separated control signaling.

In accordance with one embodiment, the control signaling is RObust Header Compression, ROHC, control signaling. In accordance with one embodiment the ROHC control signaling is implemented in a Sub-Network Dependent Convergence Protocol, SNDCP, layer, which uses exchange identifier, XID, to communicate control parameters. IN accordance with one embodiment a separate parameter indicating ROHC signaling over XID is used during XID-negotiation between the Mobile Station and the SGSN.

In the case of ROHC signaling, a new separate parameter indicating ROHC signaling over eXchange IDentification/IDentifier (XID) can be used during XID-negotiation between the mobile station MS and SGSN. This can for example be accomplished by introducing a new layer 3 XID parameter for ROHC over XID, see 8 in 3GPP TS 44.065 v7.0.0 "Subnetwork Dependent Convergence Protocol", http://www.3gpp.org/ftp/Specs/archive/44_series/44.065/44065-700.zip. An alternative is to introduce an Algorithm identifier in protocol control information compression in SNDCP, see 6.5.1.1.4 in 3GPP TS 44.065 v7.0.0 "Subnetwork Dependent Convergence Protocol", http://www.3g.pp.org/ftp/Specs/archive/44_series/44.065/44065-700.zip

Below two alternative embodiments are described for the actual transfer. The exemplary embodiments are shown in the context of a ROHC feedback packet over XID.

In accordance with a first embodiment for transfer of a ROHC feedback packet over XID, the compressor is adapted to encapsulate the feedback packet. This can be achieved by configuring the ROHC compressor to encapsulate the feedback packet in a XID frame when a feedback packet is created. In order to obtain this a new layer 3 XID parameter is introduced. The receiving Sub Network Dependent Convergence Protocol SNDCP entity is thereby enabled to distinguish this XID parameter from the rest and send the payload to the ROHC decompressor.

In the below table, an example of a XID-frame with a ROHC feedback packet is depicted. The Entity number can be set to corresponding data compression entity on a SAPI.

| Bit | **8** | **7** | **6** | **5** | **4** | **3** | **2** | **1** |
|---|---|---|---|---|---|---|---|---|
| Octet 1 | Parameter type=0 | | | | | | | |
| Octet 2 | Length=1 | | | | | | | |
| Octet 3 | Version number | | | | | | | |
| Octet 4 | Parameter type=*ROHC* | | | | | | | |
| Octet 5 | Length=n-5 | | | | | | | |
| Octet 6 | Entity | | | | | | NSAP | |
| Octet 7 | NSAPI | | | | | | | |
| Octet 8 | ROHC data | | | | | | | |
| Octet 9 | | | | | | | | |
| Octet j | High-order octet | | | | | | | |
| ... | ... | | | | | | | |
| Octet n | Low-order octet | | | | | | | |

In accordance with a second embodiment for transfer of a ROHC feedback packet over XID, a new unnumbered command and response in LLC is used. This is further described in section 6.4 in 3GPP Technical Specification (TS) 44.064 v7.2.0 "Logical Link Control (LLC) layer specification", http://www.3gpp.org/ftp/Specs/archive/44_series/44.064/44064-720.zip. An advantage of such an approach is that XID that is not designed for control signaling but rather negotiation is not required to be used. A disadvantage is that it can require a new function in the interface between the SNDCP and the LLC that supports this new command. In accordance with one embodiment the SNDCP is adapted to send the feedback as XID and let the LLC repack it.

Regardless of the specific implementation used it will be possible in the RLC layer to differentiate between the ROHC control plane and the normal data, i.e. the actual VoIP user plane. In accordance with one embodiment all signaling is separated from normal data, including normal XID signaling as well as other commands and responses from the LLC. This can be done by identifying the LLC frame types, which can be distinguished, based on the control field see 6.3 in 3GPP TS 44.064 v7.2.0 "Logical Link Control (LLC) layer specification", http://www.3gpp.org/ftp/Specs/archive/44_series/44.064/44064-720.zip. All frames except *Unconfirmed Information transfer* (UI-format) are in accordance with one embodiment robust and hence no NPM should be utilized.

In accordance with one embodiment, when sending the uncompressed answer to a feedback packet indicating errors, this can be marked as described above. This will to some extent violate the principle of separating user plane and control plane, but may nevertheless be beneficial since this allows this first payload to be prioritized as control signaling rather than payload, which can be as important as the feedback packet itself and may thus also in a sense be considered control plane data.

Additionally, if it is not desired to send the entire packet in a XID frame, the actual payload can be removed, which will make the message invalid but in a stage after the decompressor. This procedure of marking payload data as control data, can also be considered not only for the first answer to the feedback packet, but rather for a fraction of the sent packets during a given period of time after the reception of the ROHC feedback packets, so that e.g. every X^{th} packet during the Y seconds thereafter will be marked in this manner, where X and Y both are parameters that can be set to suitable values. This can be advantageous since when a ROHC feedback packet is received, the radio may be assumed to be so bad that the risk loosing ROHC synchronization again is quite high.

Further, it may be desirable to be able to separate user-plane and control-plane due to the reasons stated above for other existing and/or future protocols within GERAN that uses in-band control signaling in a manner similar to that of ROHC. Therefore the problems described in this paper, as well as the proposed solution(s), may very well be extended to other protocols than ROHC.

Using the method and device as described herein will enable a separation of the control-plane and user-plane for a protocol that such as ROHC uses in-band control signaling is made possible in GERAN. This will in turn give the BSS more freedom to assign radio bearers of different characteristics, which is not possible today. This means, that for the case of ROHC, outages due to ROHC being out-of-synch can be minimized. When using applications that require a low latency, such as VoIP, and especially during bad radio conditions, the ROHC outage can be limiting the service. The invention can therefore stretch the radio condition limit for a service.

## Claims

1. A method in a Serving GPRS Support Node, SGSN, (105) of transmitting data to a Mobile Station in a Global System for Mobile communication /Edge Radio Access Network, GERAN; radio system (100) from the SGSN, the radio system comprising a Base Transceiver Subsystem comprising a Base Station Controller, BSC, the Base Transceiver Subsystem providing an air interface over which the mobile station can connect to the radio system, wherein user plane data of service is transmitted (301) in GERAN using Radio Link Control, RLC, the method **characterized by** the steps of:
- separating (303) control signaling, from the user plane in the RLC layer, and
- providing (305) an indication to the RLC layer of the Base Station Controller, BSC, and the Mobile Station MS for enabling recognition of the separated control signaling.

2. The method according to claim 1, wherein the control signaling is RObust Header Compression, ROHC, control signaling.

3. The method according to claim 2, wherein ROHC control signaling is implemented in a Sub-Network Dependent Convergence Protocol, SNDCP, layer, which uses exchange identifier, XID, to communicate control parameters.

4. The method according to claim 2 or 3, wherein a separate parameter indicating ROHC signaling over XID is used during XID-negotiation between the Mobile Station and the SGSN.

5. A Serving GPRS Support Node, SGSN, (105) adapted to transmit data to a Mobile Station (103) in a Global System for Mobile communication /Edge Radio Access Network, GERAN; radio system, the radio system comprising a Base Transceiver Subsystem comprising a Base Station Controller, BSC, the Base Transceiver Subsystem providing an air interface over which the mobile station can connect to the radio system, wherein the SGSN is adapted to transmit user plane data of service in GERAN using Radio Link Control, RLC, the SGSN being **characterized by**:
- a processor means (106) for separating control signaling, from the user plane in the RLC layer, and
- a processor means (106) for providing an indication to the RLC layer of the Base Station Controller, BSC, and the Mobile Station MS for enabling recognition of the separated control signaling.

6. The node according to claim 5, wherein the control signaling is RObust Header Compression, ROHC, control signaling.

7. The node according to claim 6, wherein ROHC control signaling is implemented in a Sub-Network Dependent Convergence Protocol, SNDCP, layer using an exchange identifier, XID, to communicate control parameters.

8. The node according to claim 6 or 7, wherein the node is configured to use a separate parameter indicating ROHC signaling over XID during XID-negotiation between the Mobile Station and the SGSN.

## Patentansprüche

1. Verfahren in einem versorgenden GPRS-Unterstützungsknoten, SGSN, (105) zum Senden von Daten vom SGSN an eine Mobilstation in einem Funksystem (100) des GERANs (globales System für Mobilkommunikation/Edge-Funkanschlussnetz), wobei das Funksystem ein Basissendeempfangs-Subsystem umfasst, das eine Basisstationssteuerung, BSC, umfasst, wobei das Basissendeempfangs-Subsystem eine Luftschnittstelle bereitstellt, über welche sich die Mobilstation an das Funksystem anschließen kann, wobei Benutzerebenen-Dienstdaten im GERAN unter Verwendung einer Funkübertragungssteuerung, RLC, übertragen werden (301), wobei das Verfahren durch die folgenden Schritte gekennzeichnet ist:
- Trennen (303) von Steuersignalisierung von der Benutzerebene in der RLC-Schicht, und
- Übermitteln (305) einer Anzeige an die RLC-Schicht der Basisstationssteuerung, BSC, und die Mobilstation MS zum Ermöglichen der Erkennung der getrennten Steuersignalisierung.

2. Verfahren nach Anspruch 1, wobei die Steuersignalisierung RObust-Header-Komprimierungs, ROHC,-Steuersignalisierung ist.

3. Verfahren nach Anspruch 2, wobei ROHC-Steuersignalisierung in einer subnetzabhängigen Konvergenzprotokoll, SNDCP,-Schicht implementiert wird, die eine Vermittlungskennung, XID, zum Kommunizieren von Steuerparametern verwendet.

4. Verfahren nach Anspruch 2 oder 3, wobei ein getrennter Parameter, der ROHC-Signalisierung über XID anzeigt, während einer XID-Verhandlung zwischen der Mobilstation und dem SGSN verwendet wird.

5. Versorgender GPRS-Unterstützungsknoten, SGSN, (105), der so ausgelegt ist, dass er Daten an eine Mobilstation (103) in einem Funksystem des GERANs (globales System für Mobilkommunikation/Edge-Funkanschlussnetz) sendet, wobei das Funksystem ein Basissendeempfangs-Subsystem umfasst, das eine Basisstationssteuerung, BSC, umfasst, wobei das Basissendeempfangs-Subsystem eine Luftschnittstelle bereitstellt, über welche sich die Mobilstation an das Funksystem anschließen kann, wobei der SGSN so ausgelegt ist, dass er Benutzerebenen-Dienstdaten im GERAN unter Verwendung einer Funkübertragungssteuerung, RLC, überträgt, wobei der SGSN **gekennzeichnet ist durch**:
- ein Prozessormittel (106) zum Trennen von Steuersignalisierung von der Benutzerebene in der RLC-Schicht, und
- ein Prozessormittel (106) zum Übermitteln einer Anzeige an die RLC-Schicht der Basisstationssteuerung, BSC, und die Mobilstation MS zum Ermöglichen der Erkennung der getrennten Steuersignalisierung.

6. Knoten nach Anspruch 5, wobei die Steuersignalisierung RObust-Header-Komprimierungs, ROHC,-Steuersignalisierung ist.

7. Knoten nach Anspruch 6, wobei ROHC-Steuersignalisierung in einer subnetzabhängigen Konvergenzprotokoll, SNDCP,-Schicht implementiert wird, die eine Vermittlungskennung, XID, zum Kommunizieren von Steuerparametern verwendet.

8. Knoten nach Anspruch 6 oder 7, wobei der Knoten so konfiguriert ist, dass er einen getrennten Parameter, der ROHC-Signalisierung über XID anzeigt, während einer XID-Verhandlung zwischen der Mobilstation und dem SGSN verwendet.

## Revendications

1. Procédé dans un noeud de prise en charge GPRS de desserte, SGSN, (105) de transmission de données vers une station mobile dans un système radio GERAN, Global System for Mobile communication / Edge Radio Access Network (100) à partir du SGSN, le système radio comprenant un sous-système d'émetteur/récepteur de base comprenant un contrôleur de station de base, BSC, le sous-système d'émetteur/récepteur de base fournissant une interface aérienne via laquelle la station mobile peut se connecter au système radio, dans lequel les données de service de plan d'utilisateur sont transmises (301) dans GERAN en utilisant une commande de radioliaison, RLC, le procédé étant **caractérisé par** les étapes consistant à :
- séparer (303) une signalisation de commande, du plan d'utilisateur dans la couche RLC, et
- fournir (305) une indication à la couche RLC du contrôleur de station de base, BSC, et à la station mobile MS pour permettre la reconnaissance de la signalisation de commande séparée.

2. Procédé selon la revendication 1, dans lequel la signalisation de commande est une signalisation de commande à compression d'en-tête robuste, ROHC.

3. Procédé selon la revendication 2, dans lequel une signalisation de commande ROHC est implémentée dans une couche de protocole de convergence fonction du sous-réseau, SNDCP, qui utilise un identifiant d'échange, XID, pour communiquer les paramètres de commande.

4. Procédé selon les revendications 2 ou 3, dans lequel un paramètre séparé indiquant une signalisation ROHC via XID est utilisé pendant une négociation XID entre la station mobile et le SGSN.

5. Noeud de prise en charge GPRS de desserte, SGSN, (105) adapté pour transmettre des données à une station mobile (103) dans un système radio GERAN, Global System for Mobile communication / Edge Radio Access Network, le système radio comprenant un sous-système d'émetteur/récepteur de base comprenant un contrôleur de station de base, BSC, le sous-système d'émetteur/récepteur de base fournissant une interface aérienne via laquelle la station mobile peut se connecter au système radio, dans lequel le SGSN est adapté pour transmettre des données de service de plan d'utilisateur dans GERAN en utilisant une commande de radioliaison, RLC, le SGSN étant **caractérisé par** :
- un moyen de processeur (106) pour séparer une signalisation de commande, du plan d'utilisateur dans la couche RLC, et
- un moyen de processeur (106) pour fournir une indication à la couche RLC du contrôleur de station de base, BSC, et à la station mobile MS pour permettre la reconnaissance de la signalisation de commande séparée.

6. Noeud selon la revendication 5, dans lequel la signalisation de commande est une signalisation de commande à compression d'en-tête robuste, ROHC.

7. Noeud selon la revendication 6, dans lequel une signalisation de commande ROHC est implémentée dans une couche de protocole de convergence fonction du sous-réseau, SNDCP, utilisant un identifiant d'échange, XID, pour communiquer des paramètres de commande.

8. Noeud selon la revendication 6 ou 7, dans lequel le noeud est configuré pour utiliser un paramètre séparé indiquant une signalisation ROHC via XID pendant une négociation XID entre la station mobile et le SGSN.
